# EUROPEAN PATENT APPLICATION

(11) **EP 4 270 779 A1**
(43) Date of publication of application: **01.11.2023**
(21) Application number: 21885416.4
(22) Date of filing: 27.10.2021
(51) Int. Cl.: H02S 20/32

(54) **SUPPORT FOR PHOTOVOLTAIC MODULES OF A SOLAR TRACKER**

(30) Priority: 28.10.2020 ES 202032338 U
(71) Applicant: Ayllon Gomez, Lucio, 08243 Manresa Barcelona (ES); Gonzales Soria, Juan Carlos, 08640 Olesa de Montserrat Barcelona (ES); Bonjoch Manonelles, Montserrat, 25400 Les Borges Blanques - Lleida (ES); Segura Alcaide, Maria Pilar, 08310 Argentona - Barcelona (ES)
(72) Inventor: Ayllon Gomez, Lucio, 08243 Manresa Barcelona (ES); Gonzales Soria, Juan Carlos, 08640 Olesa de Montserrat Barcelona (ES); Bonjoch Manonelles, Montserrat, 25400 Les Borges Blanques - Lleida (ES); Segura Alcaide, Maria Pilar, 08310 Argentona - Barcelona (ES)
(74) Representative: Espiell Gomez, Ignacio
(86) International application number: PCT/ES2021/070776
(87) International publication number: WO 2022/090602

(57) **Abstract**

The present invention relates to a support for photovoltaic modules of a solar tracker, wherein the modules (1) are limited by a frame (2) intended to support a photovoltaic panel and the tracker is equipped with a rotation shaft (3), wherein said support comprises: a front portion (4), in turn comprising a hollow portion (6) which defines an inner chamber (7), wherein said hollow portion (6) comprises two lateral surfaces (8), an upper surface (9) between the lateral surfaces (8) and a lower surface (10), a tab (11) that protrudes perpendicularly to the upper surface (9), said tab (11) and the upper surface (9) intended to support on each side a portion of the frames (2) of the respective photovoltaic modules (1), at least two holes (13) located on the two lateral surfaces (8) of the hollow portion (6), a rear portion (14) in turn comprising; a housing (15) intended to house and couple through said housing (15) the rotation shaft (3) to the rear portion (14), and a connecting portion (16) configured for the insertion of at least one pin (17) that penetrates through said connecting portion (16) and through the holes (13), thus connecting the rear portion (14) to the front portion (4).

## Description

### OBJECT OF THE INVENTION

The present invention relates to a support for photovoltaic modules that falls within the field of installations and supports for photovoltaic modules, preferably for solar trackers or any other type of photovoltaic installation. More particularly, the present invention discloses a support with a front portion that supports a portion of the frame of a photovoltaic module and a rear portion operatively connected to said front portion that is coupled to the rotation shaft of the photovoltaic installation. More specifically, the module support provides simplicity and speed to the assembly of the photovoltaic modules to the rotation shaft in a predetermined position, making the assembly intuitive and without the possibility of errors in the mechanical assembly thereof by operators, in addition to facilitating the logistics and reducing the components for assembly thereof.

### BACKGROUND OF THE INVENTION

Solar trackers that enable the rotation of the solar panels, orienting their position according to the trajectory of the sun, pivoting around a north-south horizontal rotation shaft, are known in the state of the art. The generation of the rotational movement is performed by means of an actuation element, normally by means of a motor, which rotates the rotation beam or shaft. In solar trackers, a plurality of belts are installed that support photovoltaic panels and are connected to the rotation beam by means of several connection sets arranged along the rotation beam.

For the installation of these connection sets, however, specialised and qualified labour is required to correctly adjust the connection sets with respect to the modules and the rotation beams. Additionally, specific tools are required to carry out the assembly and the connection sets comprise a large number of parts.

### DESCRIPTION OF THE INVENTION

The present invention aims to solve some of the problems mentioned in the state of the art. More particularly, the present invention describes a support for photovoltaic modules of a solar tracker, wherein the modules are limited by a frame intended to support a photovoltaic panel and the tracker is equipped with a rotation shaft, wherein said support comprises:
- a front portion, in turn comprising:
- a hollow portion which defines an inner chamber, wherein said hollow inner portion comprises two lateral surfaces, an upper surface between the lateral surfaces and a lower surface,
- a tab that protrudes perpendicularly to the upper surface (9), said tab and the upper surface intended to support on each side a portion of the frames of the respective photovoltaic modules
- at least two holes located on the two lateral surfaces of the hollow portion,
- a rear portion, in turn comprising:
- a housing intended to house and couple through said housing the rotation shaft to the rear portion, and
- a connecting portion configured for the insertion of at least one pin that penetrates through said connecting portion and through the holes, thus connecting the rear portion to the front portion.

By means of a plurality of supports with the technical elements described above, a plurality of photovoltaic modules can be connected to the respective rotation shaft in a simple way, given the intuitive assembly, without the possibility of errors in the mechanical assembly thereof by operators, and logistics are facilitated, reducing the components usually required for the assembly of this installation.

In a preferred embodiment, the support further comprises at least two connecting tabs arranged on the upper surface of the hollow portion, said at least two connecting tabs intended to penetrate openings in the photovoltaic module. As a result, the hollow portion can be equipped with a connecting tab on each side of the tab.

In a preferred embodiment, the hollow portion comprises four connecting tabs, two connecting tabs on each side of the tab.

The connecting tabs can be oblique according to a preferred embodiment.

The support may further comprise a transverse tab perpendicular to the tab protruding on both sides of said tab in order to secure the photovoltaic module.

Advantageously, the front portion is made up of two symmetrical parts connected together by the pin that passes through the holes in the lateral surfaces. In this way, when the pin is inserted, the central portion is coupled to the rear portion, and both symmetrical parts that make up the front portion are also coupled.

In a preferred embodiment, each part comprises an opening and/or a tab on the lower surface suited to fit with one another and connect said parts to facilitate assembly before inserting the pin.

The pin can have a curved configuration defining an inner channel.

Additionally, the hollow portion can have two central openings on each lateral surface intended for the placement of a clamp in contact with each frame for the electrical continuity of the support with the frame, wherein said central openings also allow for the insertion of the connectors of the photovoltaic modules.

Likewise, the inner chamber preferably has a trapezoidal configuration in order to support and optimise the material with respect to the loads the support has to withstand due to the weight of the modules and the solar tracking mechanism.

The housing of the rear part preferably has a rectangular configuration suited to house and couple to a rectangular rotation shaft.

Alternatively, the housing can have a circular configuration suited to house a circular rotation shaft.

The configuration of the housing of the rear part will be defined by the rotation shaft which, in a preferred embodiment is quadrangular, but which can have a cross section of any shape, such as polygonal, octagonal or round.

The rear part preferably has a trapezoidal configuration. However, the configuration of said cross section can also be any other polygonal, octagonal or round shape.

The rear part can have fins that extend from the housing, in the longitudinal direction of the rotation shaft, in order to increase the contact surface of the rear part with the rotation shaft and thus increase stability and safety in the connection between same.

Optionally, the rear portion can have a quadrangular configuration defining the housing at the centre thereof and be formed by a single U-shaped part with connecting portions to connect to the front portion, overlapping onto the respective lateral surfaces of the hollow portion of the front portion, in coincidence with holes provided in said surfaces for the insertion of a pin. In this way, the same part that makes up the rear portion, being as wide as the front portion, provides a greater contact surface in the rotation shaft, ensuring the stability of the connection between both parts.

A second aspect of the present invention discloses an installation comprising a plurality of supports for photovoltaic modules according to any of the embodiments described above, wherein said supports are coupled to the rotation shaft and support a plurality of photovoltaic modules connected by means of the frame at the lateral ends thereof, forming a row of photovoltaic panels with solar tracking by means of the rotation shaft thereof.

### DESCRIPTION OF THE DRAWINGS

To complement the description that is being made and for the purpose of helping to better understand the features of the invention according to a preferred practical exemplary embodiment thereof, a set of drawings is attached as an integral part of said description in which the following is depicted in an illustrative and non-limiting manner:
Figure 1 shows a perspective view of a photovoltaic installation with solar tracking comprising a plurality of supports according to a preferred embodiment of the present invention.
Figure 2 shows an exploded view of the support of figure 1, wherein the rear portion and the central portion having two symmetrical parts are illustrated.
Figure 3 shows a lower perspective view of a preferred embodiment of a support, which illustrates the front portion comprising the hollow portion and the tab that support the solar modules, and wherein the rear portion that is coupled to the rotation shaft is also observed.
Figure 4 shows an upper perspective view of a preferred embodiment of the support, which clearly illustrates the housing for coupling to the rotation shaft, the holes in the hollow portion and the curved pin.
Figure 5 shows a cross-sectional view of a preferred embodiment of the support representing two photovoltaic modules resting on the support, which is in turn connected to the rotation shaft.
Figure 6 shows a lateral perspective view of another preferred embodiment of a support, wherein the front portion comprising the hollow portion and the tab supporting the solar modules are illustrated, as well as another exemplary embodiment of the rear portion that is coupled to the rotation shaft different from the one shown in the preceding figures, in this case having a quadrangular configuration.
Figure 7 shows an upper perspective view of the exemplary embodiment of the support of the invention shown in figure 6.

### PREFERRED EMBODIMENT OF THE INVENTION

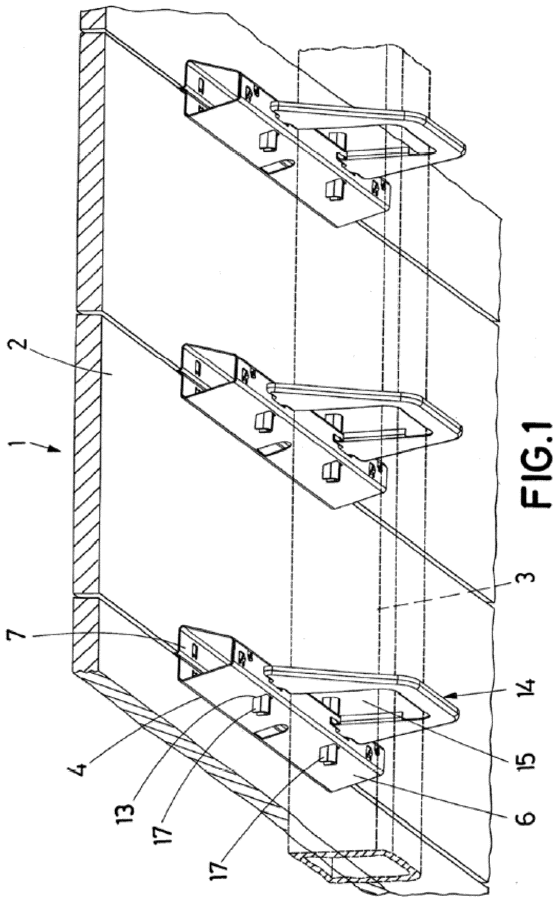

Below, with the help of figures 1-7, two preferred exemplary embodiments of the support for photovoltaic modules of a solar tracker are described, wherein the modules (1) are limited by a frame (2) intended to support a photovoltaic panel and the tracker is equipped with a rotation shaft (3).

Figure 1 shows a perspective view of a photovoltaic installation with solar tracking comprising a plurality of supports according to a preferred embodiment of the present invention.

Said figure 1 shows that each support comprises a front portion (4), in turn comprising a hollow portion (6) that defines an inner chamber (7).

Likewise, each support comprises a rear portion (14) operatively connected to the front portion (4), wherein the rear portion (14) comprises a housing (15) intended to house and couple through said housing (15) the rotation shaft (3) to the rear portion (14).

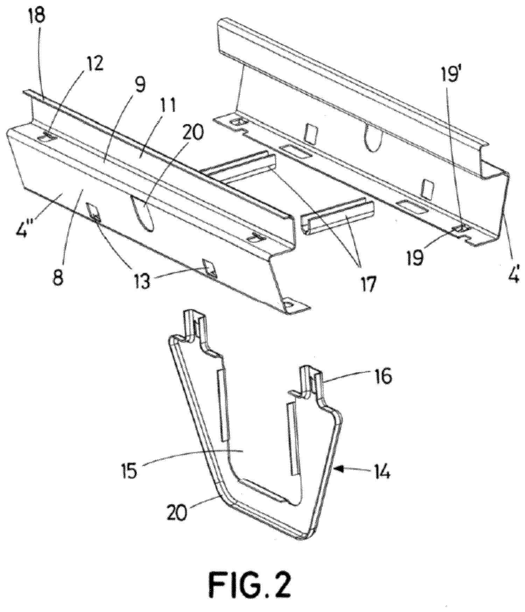

Figure 2 shows an exploded view of the support in a preferred embodiment, showing in detail that the hollow portion (6) comprises two lateral surfaces (8) and an upper surface (9) between said lateral surfaces (8). In addition, the front portion (4) also comprises a tab (11) that protrudes perpendicularly to the upper surface (9), wherein said tab (11) and the upper surface (9) are intended to support a portion on each side of the frames (2) in individual photovoltaic modules (1).

In the preferred embodiment, the support further comprises a transverse tab (18) perpendicular to the tab which protrudes on both sides of said tab (11).

As can be seen in figure 2, in the preferred embodiment described, the front portion (4) is made up of two symmetrical parts (4, 4) connected together by means of the pin (17) that goes through the holes (13). Alternatively it could be a single part.

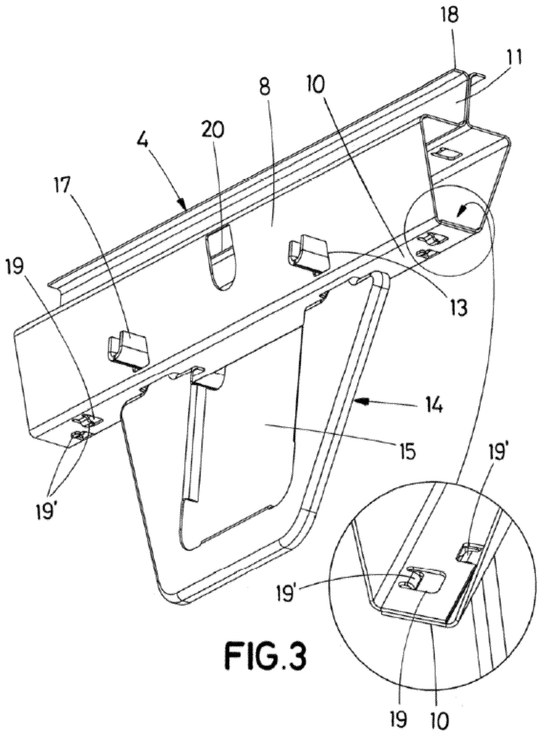

Likewise, figures 2 and 3 illustrate that the hollow part (6) is equipped with two holes (13) located on the two lateral surfaces (8) suitable for the insertion of a pin (17) and thus connect the front portion (4) to the rear portion (14), also passing through a connecting portion (16) of the rear portion. Likewise, in the preferred embodiment, the pin (17) has a curved configuration defining an inner channel.

Furthermore, figure 3 provides a detailed view showing that each part (4', 4) comprises an opening (19) or a tab (19) on the lower surface (10) and are suited to fit with one another and connect said parts (4', 4) to facilitate assembly before inserting the pin (17).

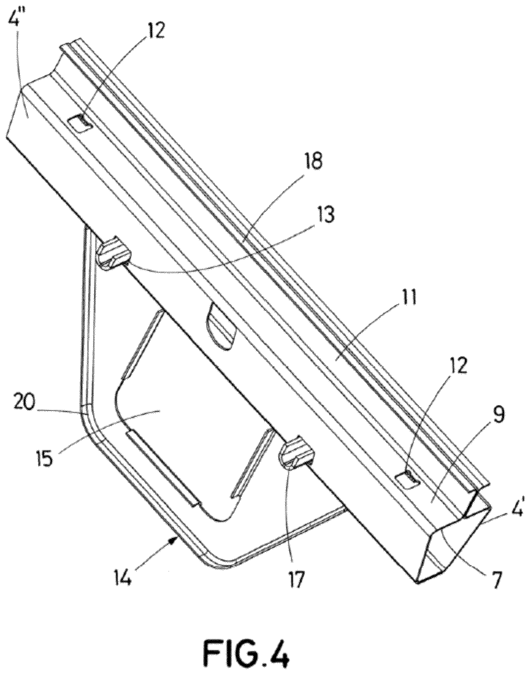

Figure 4 shows an upper perspective view of a preferred embodiment of the support in the preferred embodiment described above, where it can be seen that the hollow part (6) comprises at least two connecting tabs (12) arranged on the upper surface (9) of the hollow portion (6) and on each side of the tab (11), said at least two connecting tabs (12) intended to penetrate openings in the frame (2) of the photovoltaic module (1).

As can be seen in figures 1-4, the support comprises two central openings (20) on each lateral surface (8) of each part (4, 4) intended to place a clamp in contact with the frame (2) for the electrical continuity of the support with the frame (2), wherein said central openings (20) also allow for the insertion of the connectors for the photovoltaic modules.

Likewise, the housing (15) has a rectangular configuration suited to house and couple to a rectangular rotation shaft (3). However, the rotation shaft (3) can be any shape, such as polygonal or round, and the housing (15) must have the shape of the rotation shaft or beam (3).

Figures 1-4 show that, in a preferred embodiment, the rear portion (14) has a cross section with a trapezoidal configuration.

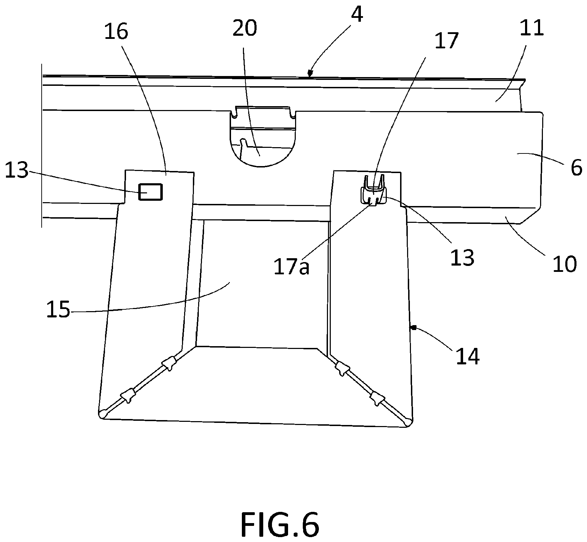

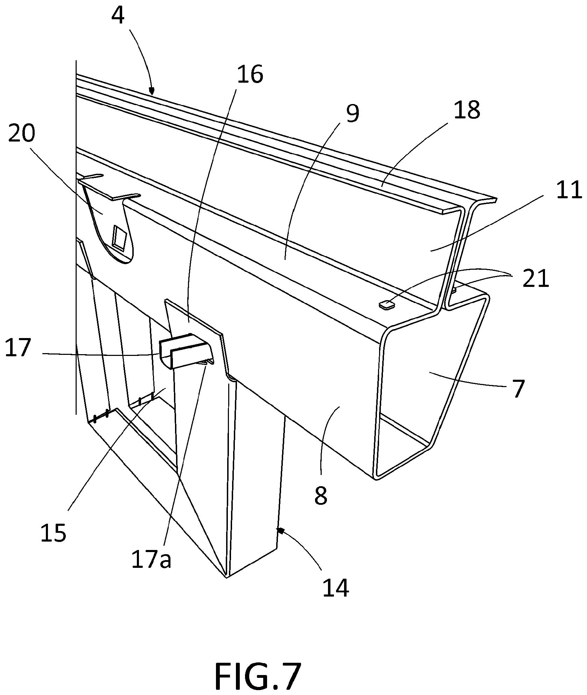

In turn, figures 6 and 7 show how in an alternative embodiment the rear portion (14) has a quadrangular configuration at the centre of which the housing (15) is defined.

In addition, unlike the example shown in figures 1 to 4, which is trapezoidal and wherein the rear portion (14) is formed by two cross sections that are coupled to the front portion (4) by means of the insertion of the connecting portions (16) into respective perforations provided in the lower surface (10) of the hollow portion (6), in this option shown in the aforementioned figures 6 and 7, the rear portion (14) is formed by a single U-shaped part, such that its width is slightly greater than the width of the lower surface (10) of the front portion (4), and in order to connect to said front portion (4), the connecting portions (16) thereof are extended, facing each other and overlapping onto the respective lateral surfaces (8) of the hollow portion (6) in coincidence with the holes (13) to allow for the insertion of the pin (17).

Moreover, in a preferred embodiment shown in figures 6 and 7, but equally applicable to the exemplary embodiment of figures 1 to 4, the pin (17) has a flexible claw (17a) on the surface thereof that is secured during the operation for inserting the pin (17) into the holes (13), preventing the removal thereof unless the same is pressed, as it is locked out of the hole, preventing an unwanted sliding of the pin (17).

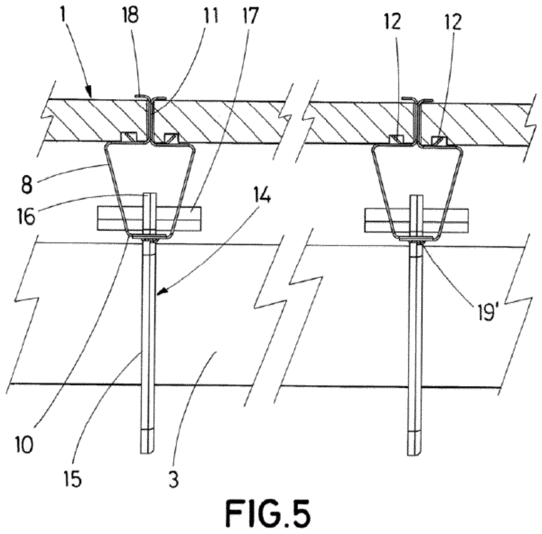

Lastly, figure 5 shows a cross-sectional view wherein two photovoltaic modules (1) resting on the support, which is in turn attached to the rotation shaft (3), are illustrated. Figure 5 clearly illustrates the openings of the frame (2) of the photovoltaic module (1) that fit into the connecting tabs (12) arranged on the upper surface (9) of the hollow portion (6) and on each side of the tab (11) of each front portion (4) of the support.

Moreover, in addition to said connecting tabs (12), the front portion (4) has, at least at both ends of the upper surface (9) of the hollow portion (6), protrusions (21) that collaborate in the attachment of the support to the frame (2) so that it fits snugly to the same.

## Claims

1. A support for solar tracker photovoltaic modules, wherein the modules (1) are limited by a frame (2) intended to support a photovoltaic panel and the tracker is equipped with a rotation shaft (3), wherein said support is **characterised in that** it comprises:
- a front portion (4), in turn comprising:
- a hollow portion (6) defining an inner chamber (7), wherein said hollow portion (6) comprises two lateral surfaces (8), an upper surface (9) between the lateral surfaces (8) and a lower surface (10),
- a tab (11) which protrudes perpendicularly to the upper surface (9), said tab (11) and the upper surface (9) intended to support on each side a portion of the frames (2) of the respective photovoltaic modules (1),
- at least two holes (13) located on the two lateral surfaces (8) of the hollow portion (6),
- a rear portion (14), in turn comprising:
- a housing (15) intended to house and couple through said housing (15) the rotation shaft (3) to the rear portion (14), and
- a connecting portion (16) configured to insert at least one pin (17) that penetrates through said connecting portion (16) and through the holes (13), thus connecting the rear portion (14) to the front portion (4).

2. The support of claim 1, comprising at least two connecting tabs (12) arranged on the upper surface (9) of the hollow portion (6) and on each side of the tab (11), said at least two connecting tabs (12) intended to penetrate openings in the frame (2) of the photovoltaic module (1).

3. The support of claim 1, further comprising a transverse tab (18) perpendicular to the tab (11) and protruding on both sides of said tab (11).

4. The support of claim 1, wherein the front portion (4) is made up of two symmetrical parts (4', 4") connected to one another by means of the pin (17) that passes through the holes (13).

5. The support of claim 1, wherein each part (4', 4") comprises an opening (19) and/or a tab (19') on the lower surface (10) suited to fit with one another and connect said parts (4', 4") to facilitate the assembly before inserting the pin (17).

6. The support of claim 1, wherein the hollow portion (6) comprises two central openings (20) on each lateral surface (8) intended to place a clamp in contact with the frame (2) for electrical continuity of the support with the frame (2), wherein said central openings (20) also allow the introduction of connectors of the photovoltaic modules.

7. The support of claim 1, wherein the pin (17) has a curved configuration defining an inner channel.

8. The support of claim 1, wherein the inner chamber (7) has a trapezoidal configuration.

9. The support of claim 1, wherein the housing (15) has a rectangular configuration suited to house and couple a rectangular rotation shaft (3).

10. The support of claim 1, wherein the housing (15) has a circular configuration suited to house a circular rotation shaft (3).

11. The support of claim 1, wherein the rear portion (14) has a trapezoidal configuration of the rear part (14).

12. The support of claim 1, wherein the rear portion (14) has a quadrangular configuration.

13. The support of claim 1, wherein the rear portion (14) is made up of a U-shaped part with connecting portions (16), to be connected to the front portion (4), which extend facing each other and overlap onto the respective lateral surfaces (8) of the hollow portion (6) in coincidence with holes (13) to allow for the insertion of a pin (17).

14. The support of claim 1, wherein the pin (17) has a flexible claw (17a) on the surface thereof that is secured during the operation for inserting the pin (17) into the holes (13) and prevents the removal thereof unless same is pressed.

15. The support of claim 1, wherein the front portion (4) has, at least at both ends of the upper surface (9) of the hollow portion (6), protrusions (21) that collaborate in the attachment of the support to the frame (2), so that it fits snugly to the same.

16. An installation of a row of solar tracker photovoltaic modules comprising a plurality of supports for solar tracker photovoltaic modules according to any one of the preceding claims, wherein each support is coupled to the rotation shaft (3) and each support supports two photovoltaic modules (1).
